(19) **Europäisches Patentamt / European Patent Office / Office européen des brevets**

(11) **EP 4 425 279 A1**

(12) # EUROPEAN PATENT APPLICATION
published in accordance with Art. 153(4) EPC

(43) Date of publication:
**04.09.2024 Bulletin 2024/36**

(21) Application number: **22886497.1**

(22) Date of filing: **14.09.2022**

(51) International Patent Classification (IPC):
**G05B 13/02** (2006.01)

(52) Cooperative Patent Classification (CPC):
**G05B 13/02**

(86) International application number:
**PCT/JP2022/034357**

(87) International publication number:
**WO 2023/074163 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.10.2021 JP 2021178000**

(71) Applicant: **Panasonic Intellectual Property Management Co., Ltd.**
**Kadoma-shi, Osaka 571-0057 (JP)**

(72) Inventors:
- **TOSHIHIRO Shunsaku**
  **Osaka 571-0057 (JP)**
- **FUJIWARA Hiroshi**
  **Osaka 571-0057 (JP)**

(74) Representative: **SSM Sandmair Patentanwälte Rechtsanwalt Partnerschaft mbB Joseph-Wild-Straße 20 81829 München (DE)**

(54) **CONTROL PARAMETER GENERATION METHOD, PROGRAM, RECORDING MEDIUM, AND CONTROL PARAMETER GENERATING DEVICE**

(57) A method for generating a control parameter used in a production apparatus including a servomotor, a memory for storing a control parameter of the servomotor, and an object, the method including: acquiring measurement data indicating a position of the driven object from a sensor that measures the position of the driven object after an arrival time when the driven object reaches an admittable position based on a command for moving the position of the driven object to a predetermined target position, wherein the admittable position indicates a position where the driven object is evaluated as having reached the predetermined target position; generating based on the measurement data, evaluation index data indicating vibration of the driven object occurring after the arrival time; and updating the control parameter based on the evaluation index data using a machine learning model that learns a relationship between the evaluation index data and the control parameter.

FIG.10

START FIRST CONTROL PARAMETER ADJUSTMENT PROCESSING
- ACTIVATE PROGRAM — S10
- OUTPUT INITIAL VALUE OF CONTROL PARAMETER — S15
- STORE CONTROL PARAMETER — S20
- CONTROL SERVOMOTOR — S25
- DRIVE DRIVEN OBJECT — S30
- MEASURE POSITION OF DRIVEN OBJECT — S35
- ACQUIRE MEASUREMENT DATA — S40
- GENERATE EVALUATION INDEX DATA — S45
- IS PREDETERMINED CONDITION SATISFIED? — S50
  - No → LEARN RELATIONSHIP BETWEEN EVALUATION INDEX DATA AND CONTROL PARAMETER — S55 → UPDATE CONTROL PARAMETER — S60 → OUTPUT CONTROL PARAMETER — S65
  - Yes → END

**Description**

TECHNICAL FIELD

The present disclosure relates to a method for generating a control parameter, a program, a recording medium, and a device for generating a control parameter, and more particularly, to such a method, such a program, such a recording medium, and a such device used in a production apparatus.

BACKGROUND ART

Conventionally, for a drive machine using a motor, a method for generating control parameters of a motor and a drive machine using a machine learning model has been proposed (see, for example, Patent Literature 1).

Citation List

Patent Literature

PTL 1: WO 2018/151215 A

SUMMARY OF THE INVENTION

Conventionally, it is desired to generate appropriate control parameters for controlling a drive machine and a production apparatus.

Therefore, an object of the present disclosure is to provide a control parameter generation method, a program, a recording medium, and a control parameter generating device capable of generating an appropriate control parameter.

A control parameter generation method according to one aspect of the present disclosure is used in a production apparatus including a servomotor, a control circuit for controlling the servomotor, a memory for storing a control parameter used when the control circuit controls the servomotor, and a driven object driven by the servomotor, and includes the followings. That is, measurement data indicating a position of the driven object is acquired from a sensor that measures the position of the driven object after an arrival time at which the driven object reaches an admittable position, wherein the admittable position indicates a position where the driven object is evaluated as having reached a predetermined target position, based on a command for moving the position of the driven object to the predetermined target position. Based on the measurement data, evaluation index data indicating vibration of the driven object occurring after the arrival time is generated. The control parameter is updated based on the evaluation index data using a machine learning model that learns a relationship between the evaluation index data and the control parameter. The updated control parameter is output to the production apparatus for storage in the memory.

A program according to one aspect of the present disclosure causes a computer of an information processing device to execute the control parameter generation method described above, the information processing device being connected to the production apparatus.

A recording medium according to another aspect of the present disclosure records a program for causing a computer of an information processing device to execute the method described above, the information processing device being connected to the production apparatus.

A control parameter generating device according to another aspect of the present disclosure is used in a production apparatus including a servomotor, a first control circuit for controlling the servomotor, a memory for storing a control parameter used when the first control circuit controls the servomotor, and a driven object driven by the servomotor. The device includes an input unit and a second control circuit. The input unit acquires measurement data indicating a position of the driven object from a sensor that measures the position of the driven object after an arrival time at which the driven object reaches an admittable position based on a command for moving the position of the driven object to the predetermined target position, wherein the admittable position indicates a position where the driven object is evaluated as having reached the predetermined target position. The second control circuit generates, based on the measurement data, evaluation index data indicating vibration of the driven object occurring after the arrival time, and updates the control parameter based on the evaluation index data using a machine learning model that learns a relationship between the evaluation index data and the control parameter. The output unit outputs the updated control parameter to the production apparatus.

A method according to another aspect of the present disclosure is used in a production apparatus including a servomotor, a control circuit for controlling the servomotor, a memory for storing a control parameter used when the control circuit controls the servomotor, and a driven object driven by the servomotor, and includes the followings. That is, evaluation index data indicating vibration of the driven object is acquired from a sensor provided with a processing part that measures a position of the driven object after an arrival time at which the driven object reaches a permissible position based on a command to move the position of the driven object to the predetermined target position, wherein the permissible position indicates a position where the driven object can be evaluated as having reached a predetermined target position,. The control parameter is updated based on the evaluation index data, using a machine learning model that learns a relationship between the evaluation index data and the control parameter.

A program according to another aspect of the present disclosure causes a computer of an information processing device to execute the method described above, the information processing device being connected to the production apparatus.

A recording medium according to another aspect of the present disclosure records a program for causing a computer of an information processing device to execute the method described above, the information processing device being connected to the production apparatus.

A device for generating a control parameter according to another aspect of the present disclosure is used in a production apparatus including a servomotor, a first control circuit for controlling the servomotor, a memory for storing a control parameter used when the first control circuit controls the servomotor, and a driven object driven by the servomotor. The device includes an input unit and a second control circuit. The input unit acquires from a sensor provided with a processing part that measures a position of the driven object, evaluation index data indicating vibration of the driven object after the arrival time at which the driven object reaches an admittable position based on a command to move the position of the driven object to the predetermined target position, wherein the admittable position indicates a position where the driven object is evaluated as having reached a predetermined target position. The second control circuit updates the control parameter based on the evaluation index data, using a machine learning model that learns a relationship between the evaluation index data and the control parameter.

According to the method, the program, the recording medium, and the control parameter generating device according to the above aspects of the present disclosure, an appropriate control parameter can be generated.

BRIEF DESCRIPTION OF THE DRAWINGS

Fig. 1 is a schematic diagram illustrating an outline of a control parameter generation system according to a first exemplary embodiment.
Fig. 2 is a block diagram illustrating a configuration of the control parameter generation system according to the first exemplary embodiment.
Fig. 3 is a schematic diagram illustrating an example of control parameters according to the first exemplary embodiment.
Fig. 4 is a schematic diagram illustrating an example of transition of a position deviation of a driven object with respect to a target position.
Fig. 5 is a schematic diagram illustrating an example of measurement data according to the first exemplary embodiment.
Fig. 6 is a schematic diagram illustrating a state in which machine learning model 14 according to the first exemplary embodiment outputs a control parameter based on a result of learning a relationship between evaluation index data and a control parameter.
Fig. 7 is a diagram illustrating an example of an image generated by an image generator according to the first exemplary embodiment.
Fig. 8 is a diagram illustrating an example of an image generated by the image generator according to the first exemplary embodiment.
Fig. 9 is a sequence diagram of first control parameter adjustment processing according to the first exemplary embodiment.
Fig. 10 is a flowchart of first control parameter adjustment processing according to the first exemplary embodiment.
Fig. 11 is a schematic diagram illustrating an outline of a control parameter generation system according to a second exemplary embodiment.
Fig. 12 is a block diagram illustrating a configuration of the control parameter generation system according to the second exemplary embodiment.
Fig. 13 is a sequence diagram of second control parameter adjustment processing according to the second exemplary embodiment.
Fig. 14 is a flowchart of second control parameter adjustment processing according to the second exemplary embodiment.
Fig. 15 is a block diagram illustrating a configuration of a generating device according to a modification.

DESCRIPTION OF EMBODIMENT

(Background to obtain one aspect of the present disclosure)

Conventionally, adjustment of a control parameter used in a production apparatus including a servomotor that drives a driven object is performed manually. However, the number of control parameters used in such a production apparatus may be 80, and the number of parameters that need to be actually adjusted may be 30 to 60. In addition, parameters to be adjusted are different depending on a driven object, an application, and the like mounted on a target production apparatus.

Under such circumstances, conventionally, adjustment of control parameters has been individually performed by a skilled technician. Nevertheless, adjustment of the control parameter may require a period of several days order.

Such adjustment of the control parameter is necessary for suppressing generation of abnormal noise due to vibration, suppressing an adverse effect on a next operation caused by vibration of a previous operation when the operation is once stopped and the next operation is started, and the like.

For example, Patent Literature 1 proposes adjusting such control parameters using a machine learning model. However, a skilled technician adjusts control parameters including human five senses such as confirming abnormal sound by hearing and confirming vibration by visual sense or tactile sense. Therefore, it is necessary to separately examine what kind of data is input to the machine learning model to effectively adjust the control parameter.

Under such a background, the inventors have conducted intensive studies and experiments on what kind of data is input to the machine learning model to effectively adjust the control parameter. As a result, the inventors have found that there is a correlation between the evaluation index data indicating the vibration of the driven object after the arrival time at which the driven object reaches the admittable position that can be evaluated as having reached the predetermined target position and the control parameter. The inventors have found that the control parameter can be effectively adjusted by inputting the evaluation index data to the machine learning model.

Based on this finding, the inventors have further conducted studies and experiments, and conceived a control parameter generation method, a program, a recording medium, and a control parameter generating device according to the present disclosure described below.

A control parameter generation method according to one aspect of the present disclosure is used in a production apparatus including a servomotor, a control circuit for controlling the servomotor, a memory for storing a control parameter used when the control circuit controls the servomotor, and a driven object driven by the servomotor, and the method includes the following. That is, measurement data indicating a position of the driven object is acquired from a sensor that measures the position of the driven object after an arrival time at which the driven object reaches an admittable position based on a command for moving the position of the driven object to the predetermined target position, wherein the admittable position indicates a position where the driven object is evaluated as having reached a predetermined target position. Based on the measurement data, evaluation index data indicating vibration of the driven object occurring after the arrival time is generated, and the control parameter is updated based on the evaluation index data, using a machine learning model that learns a relationship between the evaluation index data and the control parameter.

According to the method described above, by updating the control parameter on the basis of the evaluation index data indicating the vibration occurring after the time at which the admittable position is reached, an appropriate control parameter can be generated in a relatively short time without being performed by a skilled technician.

In the method described above, the updated control parameter may be output to the production apparatus for storage in the memory.

In addition, the evaluation index data may indicate a sum of an area surrounded by i) a deviation waveform indicating vibration of the driven object occurring after the arrival time and ii) a reference axis.

As a result, an appropriate control parameter can be generated based on the sum of the area surrounded by the reference axis and the deviation waveform indicating the vibration of the driven object after the time at which the admittable position is reached.

Further, the evaluation index data may indicate a variation degree of a deviation waveform indicating vibration of the driven object occurring after the arrival time.

As a result, an appropriate control parameter can be generated based on the variation degree of the deviation waveform indicating the vibration of the driven object after the time at which the admittable position is reached.

Further, the evaluation index data may indicate an effective value of a deviation waveform indicating vibration of the driven object after the arrival time.

As a result, an appropriate control parameter can be generated based on the effective value of the deviation waveform indicating the vibration of the driven object after the time at which the admittable position is reached.

Further, the production apparatus may include any one of a mounting device, a processing device, and a machining device.

As a result, it is possible to generate an appropriate control parameter for the production apparatus that is at least one of the mounting device, the processing device, and the machining device.

A program according to another aspect of the present disclosure causes a computer of an information processing device to execute the method described above, the information processing device being connected to the production apparatus.

According to the program described above, by updating the control parameter on the basis of the evaluation index data indicating the vibration after the time at which the admittable position is reached, an appropriate control parameter can be generated in a relatively short time without being performed by a skilled technician.

A recording medium according to another aspect of the present disclosure records a program for causing a computer of an information processing device to execute the method described above, the information processing device being connected to the production apparatus.

According to the recording medium described above, by updating the control parameter on the basis of the evaluation index data indicating the vibration after the time at which the admittable position is reached, an appropriate control parameter can be generated in a relatively short time without being performed by a skilled technician.

A device according to another aspect of the present disclosure is used in a production apparatus including a servomotor, a first control circuit for controlling the servomotor, a memory for storing a control parameter used when the first control circuit controls the servomotor, and a driven object driven by the servomotor. The device includes an input unit and a second control circuit. The input unit acquires measurement data indicating a position of the driven object from a sensor that measures the position of the driven object after an arrival time at which the driven object reaches an admittable position based on a command for moving the position of the driven object to the predetermined target position, wherein the admittable position indicates a position where the driven object is evaluated as having reached a predetermined target position,. The second control circuit generates, based on the measurement data, evaluation index data indicating vibration of the driven object occurring after the arrival time, and updates the control parameter based on the evaluation index data using a machine learning model that learns a relationship between the evaluation index data and the control parameter.

According to the device described above, by updating the control parameter on the basis of the evaluation index data indicating the vibration occurring after the time at which the admittable position is reached, an appropriate control parameter can be generated in a relatively short time without being performed by a skilled technician. The device described above may further include an output unit that outputs, to the production apparatus, the updated control parameter for storage in the memory.

A method according to another aspect of the present disclosure is used in a production apparatus including a servomotor, a control circuit for controlling the servomotor, a memory for storing a control parameter used when the control circuit controls the servomotor, and a driven object driven by the servomotor, and the method includes the followings. That is, evaluation index data indicating vibration of the driven object is acquired from a sensor provided with a processing part that measures a position of the driven object, after an arrival time at which the driven object reaches an admittable position based on a command for moving the position of the driven object to the predetermined target position, wherein the admittable position indicates a position where the driven object is evaluated as having reached a predetermined target position,. The control parameter is updated based on the evaluation index data using a machine learning model that learns a relationship between the evaluation index data and the control parameter.

According to the method described above, by updating the control parameter on the basis of the evaluation index data indicating the vibration occurring after the time at which the admittable position is reached, an appropriate control parameter can be generated in a relatively short time without being performed by a skilled technician. In the control parameter generation method described above, the updated control parameter may be output to the production apparatus for storage in the memory.

In addition, the evaluation index data may indicate a sum of an area surrounded by i) a deviation waveform indicating vibration of the driven object after the arrival time and ii) a reference axis.

As a result, an appropriate control parameter can be generated based on the sum of the area surrounded by the reference axis and the deviation waveform indicating the vibration of the driven object occurring after the time at which the admittable position is reached.

Further, the evaluation index data may indicate a variation degree of a deviation waveform indicating vibration of the driven object occurring after the arrival time.

As a result, an appropriate control parameter can be generated based on the variation degree of the deviation waveform indicating the vibration of the driven object occurring after the time at which the admittable position is reached.

Further, the evaluation index data may indicate an effective value of a deviation waveform indicating vibration of the driven object occurring after the arrival time.

As a result, an appropriate control parameter can be generated based on the effective value of the deviation waveform indicating the vibration of the driven object after the time at which the admittable position is reached.

Further, the production apparatus may include any one of a mounting device, a processing device, and a machining device.

As a result, it is possible to generate an appropriate control parameter for the production apparatus that is any one of the mounting device, the processing device, and the machining device.

A program according to another aspect of the present disclosure causes a computer of an information processing device to execute the method described above, the information processing device being connected to the production apparatus.

According to the program described above, by updating the control parameter on the basis of the evaluation index data indicating the vibration occurring after the time at which the admittable position is reached, an appropriate control parameter can be generated in a relatively short time without being performed by a skilled technician.

A recording medium according to another aspect of the present disclosure records a program for causing a computer of an information processing device to execute the method described above, the information processing device being connected to the production apparatus.

According to the recording medium described above, by updating the control parameter on the basis of the evaluation index data indicating the vibration occurring after the time at which the admittable position is reached, an appropriate control parameter can be generated in a relatively short time without being performed by a skilled technician.

A device according to another aspect of the present disclosure is used in a production apparatus including a servomotor, a first control circuit for controlling the servomotor, a memory for storing a control parameter used when the first control circuit controls the servomotor, and a driven object driven by the servomotor. The device includes an input unit and a second control circuit. The input unit acquires from a sensor provided with a processing part that measures a position of the driven object, evaluation index data indicating vibration of the driven object after an arrival time at which the driven object reaches an admittable position based on a command for moving the position of the driven object to a predetermined target position, wherein the admittable position indicates a position where is evaluated as having reached the predetermined target position. The second control circuit updates the control parameter based on the evaluation index data, using a machine learning model that learns a relationship between the evaluation index data and the control parameter.

According to the device described above, by updating the control parameter on the basis of the evaluation index data indicating the vibration occurring after the time at which the admittable position is reached, an appropriate control parameter can be generated in a relatively short time without being performed by a skilled technician. The device described above may further include an output unit that outputs, to the production apparatus, the updated control parameter for storage in the memory.

Hereinafter, a specific example of a control parameter generation system according to one aspect of the present disclosure will be described with reference to the drawings. Exemplary embodiments to be described herein each illustrate a specific example of the present disclosure. Therefore, numerical values, shapes, components, arrangement positions and connection modes of the components, steps, order of the steps, and the like illustrated in the exemplary embodiments below are merely examples, and thus are not intended to limit the present disclosure. Each of the drawings is a schematic view, and is not necessarily precisely illustrated. In each drawing, substantially the same components as those in other drawings are denoted by the same reference numerals, and redundant description will be omitted or simplified.

(First exemplary embodiment)

Hereinafter, control parameter generation system 1 according to a first exemplary embodiment will be described. This control parameter generation system is a system that generates a control parameter used for a production apparatus including a servomotor that drives a driven object.

<Configuration>

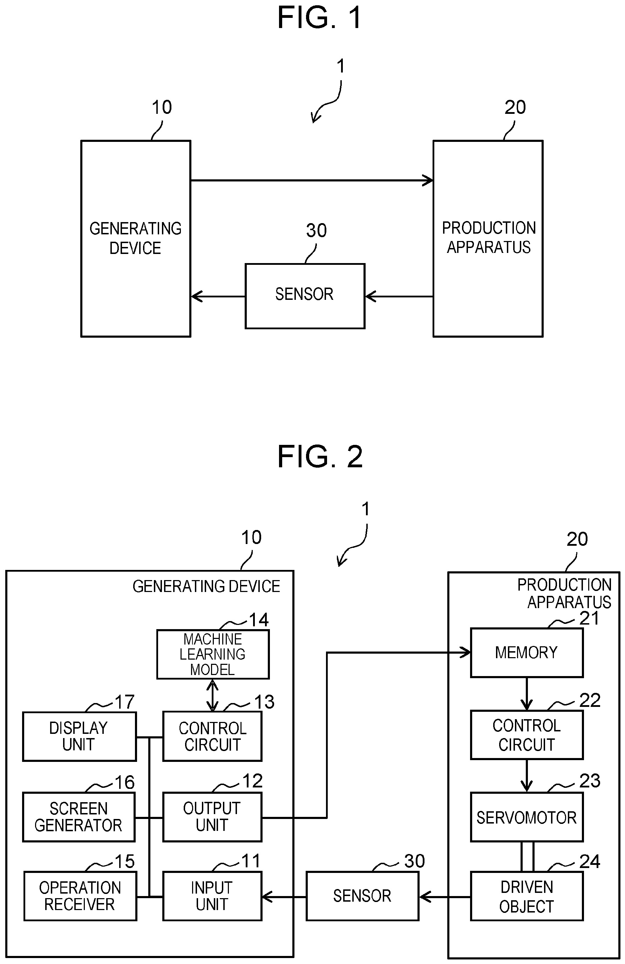

Fig. 1 is a schematic diagram illustrating an outline of control parameter generation system 1 according to the first exemplary embodiment.

Fig. 2 is a block diagram illustrating a configuration of control parameter generation system 1.

As illustrated in Fig. 1, control parameter generation system 1 includes generating device 10, production apparatus 20, and sensor 30.

Production apparatus 20 is a device used to produce equipment, and performs processing, mounting, conveyance, and the like of the equipment. Production apparatus 20 is installed, for example, in a production line of a factory. Specifically, production apparatus 20 is, for example, a light emitting diode (LED) bonder, a mounting machine, a processing machine, a take-out robot, or the like.

As illustrated in Fig. 2, production apparatus 20 includes memory 21, control circuit 22, servomotor 23, and driven object 24.

The operation of servomotor 23 is controlled by control circuit 22 to drive driven object 24. Servomotor 23 may be, for example, a rotary motor or a linear motor.

Driven object 24 is an object to be driven by servomotor 23. Driven object 24 is, for example, a processing object to be processed in production apparatus 20, a mounting object to be mounted, a conveyance object to be conveyed, or the like.

Control circuit 22 controls servomotor 23 by outputting a command for setting the position of driven object 24 to a predetermined target position to servomotor 23. The command output from control circuit 22 to servomotor 23 may be, for example, a position command that commands the position of servomotor 23 or driven object 24, or may be, for example, a torque command that commands the torque of servomotor 23.

Control circuit 22 controls servomotor 23 based on control parameters stored in memory 21. In other words, control circuit 22 uses the control parameters stored in memory 21 when controlling servomotor 23.

Memory 21 stores the control parameters used when control circuit 22 controls servomotor 23. The control parameters stored in memory 21 are control parameters output from generating device 10.

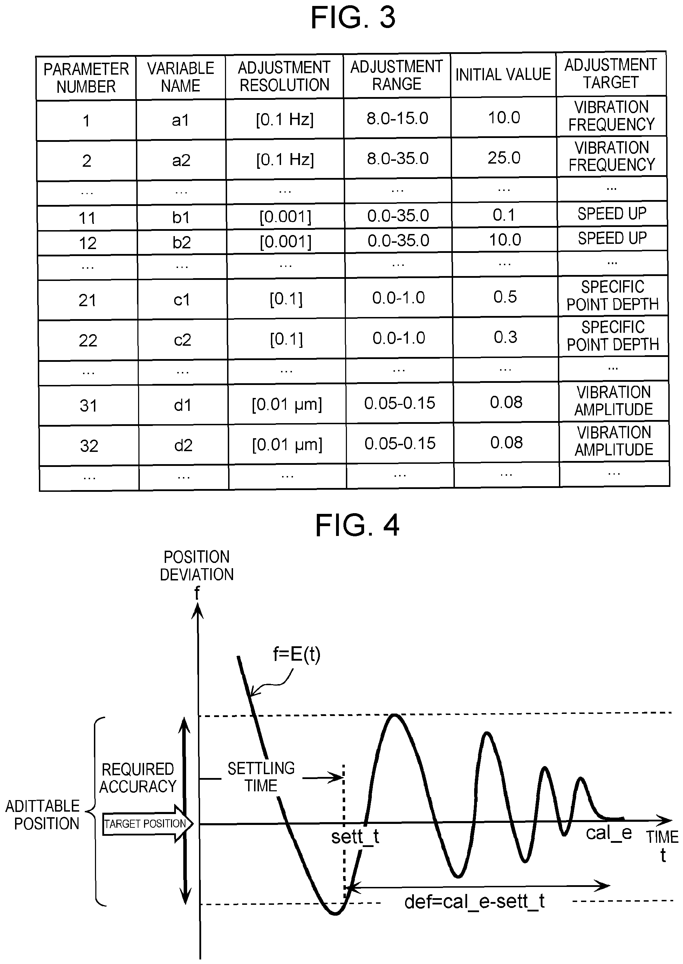

Fig. 3 is a schematic diagram illustrating an example of control parameters stored in memory 21.

As illustrated in Fig. 3, the control parameters stored in memory 21 include, for example, parameters a1 and a2 for adjusting the vibration frequency of driven object 24, parameters b1 and b2 for adjusting the speed increase of driven object 24, parameters c1 and c2 for adjusting the depth of the singular point in the vibration characteristic of driven object 24, parameters d1 and d2 for adjusting the vibration amplitude of driven object 24, and the like.

In general, the control parameters include parameters having a trade-off relationship with each other, for example, parameters b 1 and b2 for adjusting speeding up, parameters c1 and c2 for adjusting the depth of the singular point in the vibration characteristic, and parameters d1 and d2 for adjusting the vibration amplitude.

Returning again to Figs. 1 and 2, the description of control parameter generation system 1 will be continued.

Sensor 30 measures the position of driven object 24. Then, sensor 30 outputs, to generating device 10, measurement data indicating the position of driven object 24 after the arrival time at which driven object 24 reaches the admittable position that can be evaluated as having reached the predetermined target position.

Fig. 4 is a schematic diagram illustrating an example of transition of a position deviation of driven object 24 with respect to a target position when production apparatus 20 drives driven object 24 to the target position.

In Fig. 4, the horizontal axis represents time, and the vertical axis represents the positional deviation of driven object 24 with respect to the target position.

As illustrated in Fig. 4, in the present specification, the admittable position indicates a position where a positional deviation from a target position falls within required accuracy. Furthermore, as illustrated in Fig. 4, in the present specification, the time (hereinafter, also referred to as "settling time") at which driven object 24 reaches the admittable position that is evaluated as having reached the target position refers to the time (time sett_t in Fig. 4) at which the driven object 24 has finally reached the admittable position in a case where the driven object 24 has not deviated from the admittable position again after reaching the admittable position.

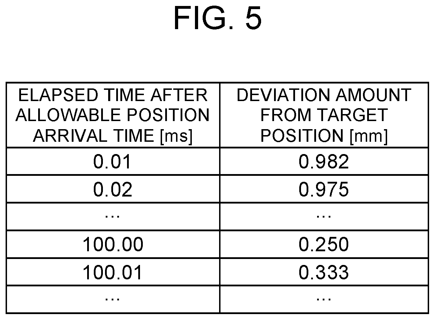

Fig. 5 is a data configuration diagram illustrating an example of measurement data output from sensor 30.

As illustrated in Fig. 5, the measurement data is, for example, data in which an elapsed time [ms] after the time at which the admittable position is reached and a deviation amount [mm] from the target position are associated on a one-to-one basis.

Returning again to Figs. 1 and 2, the description of control parameter generation system 1 will be continued.

Generating device 10 generates a control parameter (hereinafter, also referred to as "update control parameter") for updating the control parameter (hereinafter, also referred to as a "control parameter under storage") stored in memory 21. More specifically, generating device 10 sequentially acquires the measurement data output from sensor 30 as a result of production apparatus 20 driven object 24 to the target position using the control parameter under storage, sequentially generates the control parameter for update based on the acquired measurement data, and sequentially outputs the generated control parameter for update to production apparatus 20.

As illustrated in Fig. 2, generating device 10 includes input unit 11, output unit 12, control circuit 13, machine learning model 14, operation receiver 15, image generator 16, and display unit 17.

Generating device 10 is implemented, for example, in a computer including a processor, a memory, and an input/output interface by the processor executing a program stored in the memory. Such a computer is, for example, a personal computer.

Input unit 11 acquires the measurement data output from sensor 30.

Control circuit 13 generates evaluation index data indicating the vibration of driven object 24 after the settling time based on the measurement data acquired by input unit 11, and updates the control parameter using machine learning model 14 that learns the relationship between the evaluation index data and the control parameter based on the generated evaluation index data.

The evaluation index data generated by control circuit 13 has any one of the following (1) to (3) or (4). That is, (1) the sum of the area surrounded by the deviation waveform indicating the vibration of driven object 24 after the settling time and the reference axis (hereinafter, also referred to as "summed area evaluation index data"). (2) The variation degree of the deviation waveform indicating the vibration of driven object 24 after the settling time (hereinafter, also referred to as "variation degree evaluation index data"). (3) The effective value (hereinafter, also referred to as "effective value evaluation index data") of the deviation waveform indicating the vibration of driven object 24 after the settling time. (4) The time (hereinafter, also referred to as "settling time evaluation index data") from the time at which driven object 24 starts to be driven to the settling time.

The evaluation index data generated by control circuit 13 is designated by a user who uses control parameter generation system 1.

Hereinafter, the summed area evaluation index data, the variation degree evaluation index data, and the effective value evaluation index data generated by control circuit 13 will be described in more detail with reference to Fig. 4.

As illustrated in Fig. 4, more specifically, the summed area data generated by control circuit 13 is calculated by a mathematical formula expressed by (Formula 1), (Formula 2), or (Formula 3) in a case where position deviation f of the driven object with respect to the target position is represented by f = E (t) as a variable at the time t.

[Math. 1]

$$\int_{\text{sett\_t}}^{\text{cal\_e}} |E(t)| \, dt \qquad \qquad \text{(Formula 1)}$$

[Math. 2]

$$\int_{\text{sett\_t}}^{\text{cal\_e}} \sqrt{E(t) \cdot E(t)} \, dt \qquad \qquad \text{(Formula 2)}$$

[Math. 3]

$$\int_{\text{sett\_t}}^{\text{cal\_e}} E(t)^2 \, dt \qquad \qquad \text{(Formula 3)}$$

Here, the start point sett_t of the integration interval is the settling time, and the end point cal_e of the integration interval is the time set by a user. Here, the description will be given assuming that the start point sett_t of the integration section is the settling time, but the start point sett_t of the integration section may be the settling time or any time after the settling time.

For example, cal_e may be set to a time at which the positional deviation finally reaches within 1/10 of the required accuracy in a case where the positional deviation of driven object 24 with respect to the target position reaches within 1/10 of the required accuracy and then the positional deviation does not deviate again from within 1/10 of the required accuracy. Furthermore, for example, cal_e may be set to a time at which the number of data included in the measurement data acquired by input unit 11 reaches a predetermined number, or may be set to a time at which a specified time has elapsed from the settling time.

More specifically, when def = cal_e - sett_t, the variation degree data generated by control circuit 13 is calculated by the mathematical formula shown in (Formula 4).

[Math. 4]

$$\frac{\int_{\text{sett\_t}}^{\text{cal\_e}} E(t)^2 dt}{\text{def}} - \left( \frac{\int_{\text{sett\_t}}^{\text{cal\_e}} |E(t)| dt}{\text{def}} \right)^2 \qquad \text{(Formula 4)}$$

More specifically, the effective value generated by control circuit 13 is calculated by the mathematical formula shown in (Formula 5).

[Math. 5]

$$\sqrt{\frac{1}{\text{def}} \int_{\text{sett\_t}}^{\text{cal\_e}} E(t)^2 \, dt} \qquad \qquad \text{(Formula 5)}$$

Returning again to Figs. 1 and 2, the description of control parameter generation system 1 will be continued.

Machine learning model 14 is a machine learning model that learns the relationship between the evaluation index data and the control parameter, learns the relationship between the evaluation index data and the control parameter every time the evaluation index data is sequentially input from control circuit 13, and sequentially outputs the control parameter to control circuit 13 based on the learning result.

More specifically, machine learning model 14 learns the relationship between the evaluation index data and the control parameter (hereinafter, also referred to as a "corresponding control parameter") corresponding to the evaluation index data each time the evaluation index data is sequentially input from control circuit 13 using the Bayesian optimization algorithm, and outputs the control parameter in which the evaluation index data is predicted to be the smallest to control circuit 13 based on the learning result.

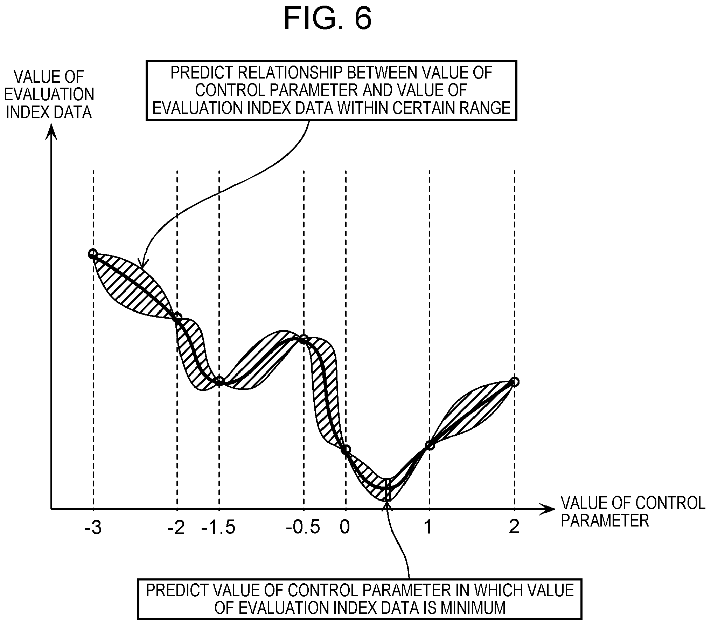

Fig. 6 is a schematic diagram illustrating a state in which machine learning model 14 learns the relationship between the evaluation index data and the corresponding control parameter and outputs the control parameter in which the evaluation index data is predicted to be the smallest based on the learned result.

In Fig. 6, the horizontal axis represents the value of the control parameter, and the vertical axis represents the value of the evaluation index data. Furthermore, in Fig. 6, points plotted with circles are points indicating the values of the corresponding control parameters of the evaluation index data for each of the values of the evaluation index data input in the past to machine learning model 14.

As illustrated in Fig. 6, machine learning model 14 predicts the relationship between the evaluation index data and the corresponding control parameter with a certain range using the Bayesian optimization algorithm, and outputs the control parameter in which the evaluation value data is predicted to be the smallest using the predicted relationship.

Returning again to Figs. 1 and 2, the description of control parameter generation system 1 will be continued.

Output unit 12 outputs the control parameter updated by control circuit 13 to production apparatus 20 in order to store the control parameter in memory 21.

Operation receiver 15 receives an input operation to generating device 10 by a user using control parameter generation system 1.

Display unit 17 displays an image to be provided to a user who uses control parameter generation system 1.

Image generator 16 generates an image to be displayed by display unit 17.

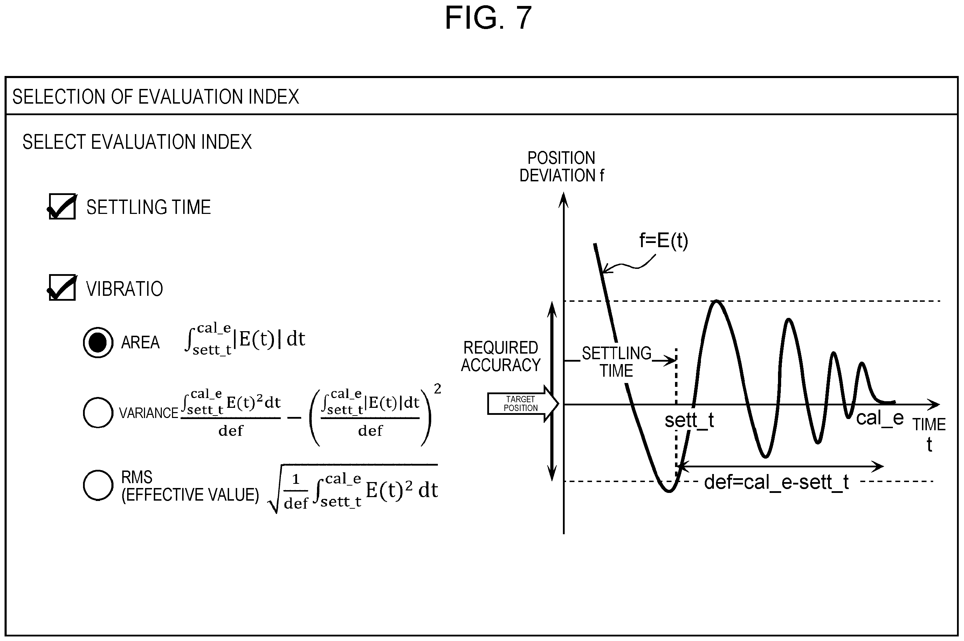

Fig. 7 is an example of an image generated by image generator 16. Fig. 7 is an example of an image (hereinafter, also referred to as "evaluation index data designation image") prompting a user who uses control parameter generation system 1 to specify which evaluation index data is to be the evaluation index data generated by control circuit 13 when control parameter generation system 1 starts first control parameter adjustment processing to be described later.

As illustrated in Fig. 7, generating device 10 displays the evaluation index data designation image on display unit 17 to urge a user to designate at least one of the summed area evaluation index data, the variation degree evaluation index data, and the effective value evaluation index data (hereinafter, these three evaluation index data are also referred to as "vibration evaluation index data"), and the settling time evaluation value data as the evaluation index data generated by control circuit 13.

For example, the user designates the settling time evaluation index data as the evaluation index data by putting a check mark on the evaluation index data designation image next to the "settling time". For example, the user puts a check mark next to "Vibration" and puts a circle next to "Area" on the evaluation index data designation image, thereby designating the area sum evaluation index data as the evaluation index data. For example, the user puts a check mark next to "Vibration" and puts a circle next to "Variance" on the evaluation index data designation image, thereby designating the variation degree evaluation index data as the evaluation index data. For example, the user puts a check mark next to "Vibration" on the evaluation index data designation image and puts a circle next to "RMS (effective value)", thereby designating the effective value evaluation index data as the evaluation index data.

In addition, for example, the user puts a check mark both next to the "Settling time" and next to the "Vibration" on the evaluation index data designation image, thereby designating any one of the settling time evaluation index data and the vibration evaluation index data as the evaluation index data. In this case, control circuit 13 may use the sum of the value of the settling time evaluation index data and the value of the vibration evaluation index data as the value of the evaluation index data, or may use the sum of values obtained by multiplying each of the value of the settling time evaluation index data and the value of the vibration evaluation index data by a predetermined weighting coefficient as the value of the evaluation index data.

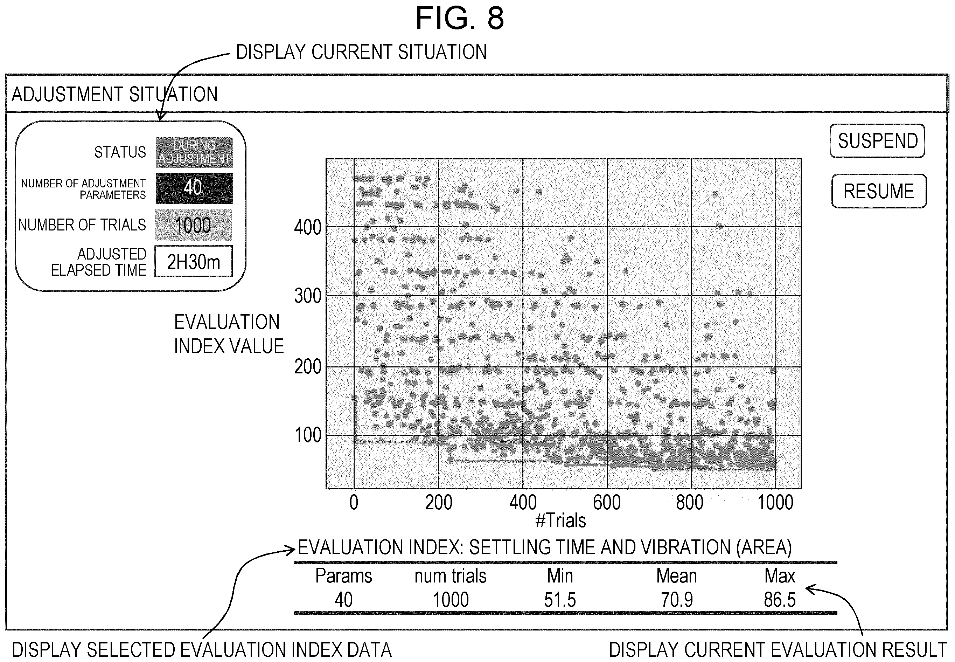

Fig. 8 is another example of the image generated by image generator 16. Fig. 8 is an example of an image (hereinafter, also referred to as a "situation presentation image") that presents the status of the value of the evaluation index data in the parameter adjustment processing to the user who uses control parameter generation system 1 while control parameter generation system 1 is executing the first control parameter adjustment processing to be described later.

In the graph in Fig. 8, the horizontal axis represents the number of control parameters sequentially output by generating device 10, and the vertical axis represents the value of the evaluation index data corresponding to each of the control parameters sequentially output by generating device 10. In the graph in Fig. 8, a solid broken line indicates transition of the minimum value of the value of the evaluation index data corresponding to the control parameter output by generating device 10.

As illustrated in Fig. 8, an icon (hereinafter, also referred to as a "Suspension icon") written as "Suspend" and an icon (hereinafter, also referred to as a "Resume icon") written as "Resume" are arranged in the upper right of the situation punctual image.

The suspension icon is, for example, an icon that can suspend the first control parameter adjustment processing by clicking the suspension icon when it is determined that the first control parameter adjustment processing does not need to be continued anymore because the value of the evaluation index value data corresponding to the control parameter output by generating device 10 is sufficiently small as a result of the user viewing the situation presentation image.

The restart icon is, for example, an icon that can continue the first control parameter adjustment processing by clicking the restart icon when it is determined that the first control parameter adjustment processing needs to be continued because the value of the evaluation index value data corresponding to the control parameter output by generating device 10 is not sufficiently small as a result of the user viewing the situation presentation image.

<Operation>

An operation performed by control parameter generation system 1 having the above configuration will be described below.

Control parameter generation system 1 executes the first control parameter adjustment processing for adjusting the control parameter stored in memory 21 to an appropriate value. The first control parameter adjustment processing is started, for example, when a user using control parameter generation system 1 performs an operation to start the first control parameter adjustment processing on generating device 10.

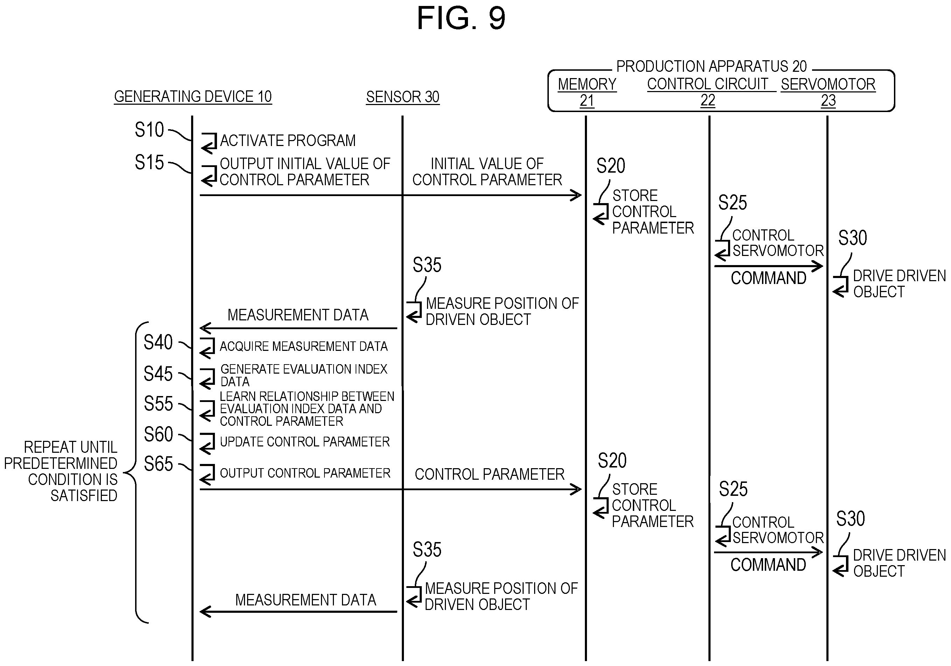

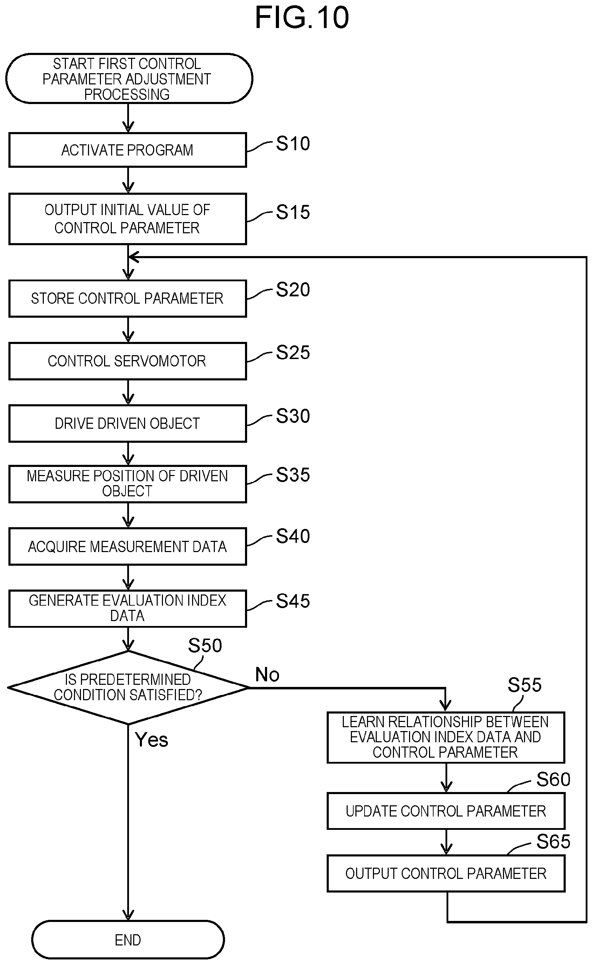

Fig. 9 is a sequence diagram of the first control parameter adjustment processing, and Fig. 10 is a flowchart of the first control parameter adjustment processing.

As illustrated in Figs. 9 and 10, when the first control parameter adjustment processing is activated, generating device 10 starts a predetermined program for executing the first control parameter control processing (step S10).

When the predetermined program is activated, output unit 12 outputs the initial value of the control parameter to memory 21 (step S15). At this time, output unit 12 may output, for example, an initial value of a control parameter including a predetermined value, may output, for example, an initial value of a control parameter including a value designated by the user, or may output, for example, an initial value of a control parameter including a value calculated by a calculation method designated by the user.

When the control parameter is output from output unit 12, memory 21 stores the control parameter output from output unit 12 (step S20). Then, control circuit 22 generates a command for setting the position of driven object 24 to a predetermined target position based on the control parameter stored in memory 21, and outputs the command to servomotor 23. As a result, control circuit 22 controls servomotor 23 (step S25). Then, servomotor 23 drives driven object 24 based on the command output from control circuit 22 (step S30).

When driven object 24 is driven by servomotor 23, sensor 30 measures the position of driven object 24 (step S35), and outputs measurement data indicating the position of driven object 24 after the arrival time at which driven object 24 reaches the admittable position that can be evaluated as having reached the predetermined target position to input unit 11. Then, input unit 11 acquires the measurement data output from sensor 30 (step S40).

When input unit 11 acquires the measurement data, control circuit 13 generates evaluation index data indicating the vibration of driven object 24 after the settling time based on the measurement data (step S45). Then, control circuit 13 checks whether or not the evaluation index data satisfies a predetermined condition (step S50). Here, the predetermined condition is, for example, a condition that the evaluation index data is a value indicating that an appropriate control parameter has been generated.

When the generated evaluation index data does not satisfy the predetermined condition in the processing of step S50 (step S50: No), control circuit 13 outputs the generated evaluation index data to machine learning model 14. Then, machine learning model 14 learns the relationship between the evaluation index data and the corresponding control parameter (step S55), and outputs the control parameter in which the value of the evaluation index data is predicted to be the smallest. Then, control circuit 13 updates the control parameter previously output by output unit 12 with the control parameter newly output from machine learning model 14 (step S60). Then, output unit 12 transmits the control parameter newly updated by control circuit 13 to memory 21 (step S65).

When the processing of step S65 ends, control parameter generation system 1 proceeds to the processing of step S20 and repeats the processing of step S20 and subsequent steps.

In the processing of step S50, when the generated evaluation index data satisfies the predetermined condition (step S50: Yes), control parameter generation system 1 ends the first control parameter adjustment processing.

<Consideration>

As described above, control parameter generation system 1 having the above configuration executes the first control parameter adjustment processing to repeatedly adjust the evaluation index value data until the evaluation index value data satisfies the predetermined condition.

Therefore, according to control parameter generation system 1, it is possible to generate an appropriate control parameter in a relatively short time without being performed by a skilled technician.

(Second exemplary embodiment)

Hereinafter, a control parameter generation system according to a second exemplary embodiment configured by partially changing the configuration from control parameter generation system 1 according to the first exemplary embodiment will be described.

Control parameter generation system 1 is an example of a system in which sensor 30 measures the position of the driven object and outputs measurement data, and generating device 10 acquires the measurement data output from sensor 30.

On the other hand, the control parameter generation system according to the second exemplary embodiment is an example of a system in which a sensor with a processing function according to the second exemplary embodiment measures a position of a driven object and outputs evaluation index data, and a generating device acquires measurement data according to the second exemplary embodiment and the evaluation index data output from the sensor with a processing function according to the second exemplary embodiment.

Here, in the control parameter generation system according to the second exemplary embodiment, components similar to those of control parameter generation system 1 have already been described and are denoted by the same reference numerals, detailed description thereof is omitted, and differences from control parameter generation system 1 will be mainly described.

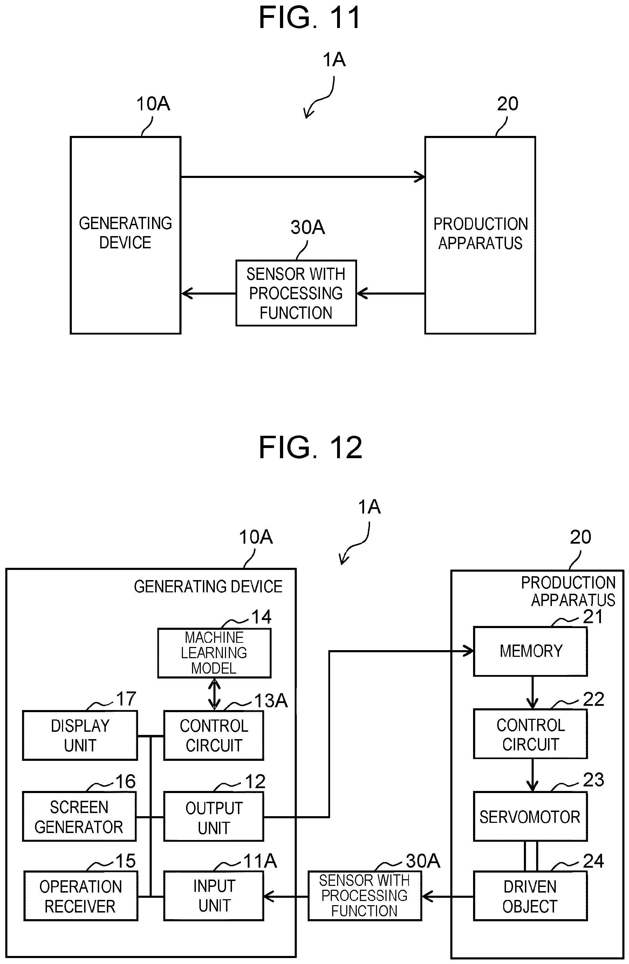

Fig. 11 is a schematic diagram illustrating an outline of control parameter generation system 1A according to the second exemplary embodiment.

Fig. 12 is a block diagram illustrating a configuration of control parameter generation system 1A.

As illustrated in Fig. 11, control parameter generation system 1A is configured by being changed from control parameter generation system 1 according to the first exemplary embodiment such that generating device 10 is changed to generating device 10A, and sensor 30 is changed to sensor 30A with a processing function. As illustrated in Fig. 12, generating device 10A is configured by being changed from generating device 10 such that input unit 11 is changed to input unit 11A, and control circuit 13 is changed to control circuit 13A.

Sensor 30A with a processing function measures the position of driven object 24. Then, sensor 30A with a processing function generates measurement data indicating the position of driven object 24 after the arrival time at which driven object 24 reaches the admittable position that can be evaluated as having reached the predetermined target position. Further, sensor 30A with a processing function generates evaluation index data indicating the vibration of driven object 24 after the settling time based on the generated measurement data, and outputs the generated evaluation index data to generating device 10A.

Sensor 30A with a processing function is implemented, for example, in a computer including a sensing device that measures the position of driven object 24, a processor, a memory, and an input/output interface by the processor executing a program stored in the memory. Such a computer is, for example, a personal computer.

The input unit 11A acquires the evaluation index data output from sensor 30A with a processing function.

Control circuit 13A updates the control parameter using machine learning model 14 that learns the relationship between the evaluation index data and the control parameter based on the evaluation index data acquired by input unit 11A.

<Operation>

An operation performed by control parameter generation system 1A having the above configuration will be described below.

Control parameter generation system 1A performs second control parameter adjustment processing in which some processing is changed from the first control parameter adjustment processing according to the first exemplary embodiment.

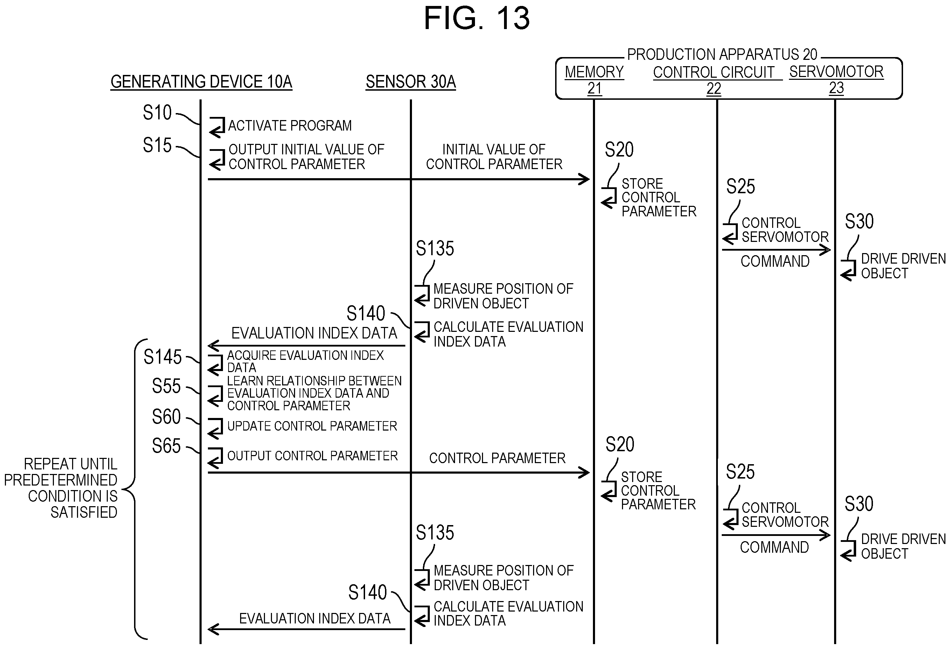

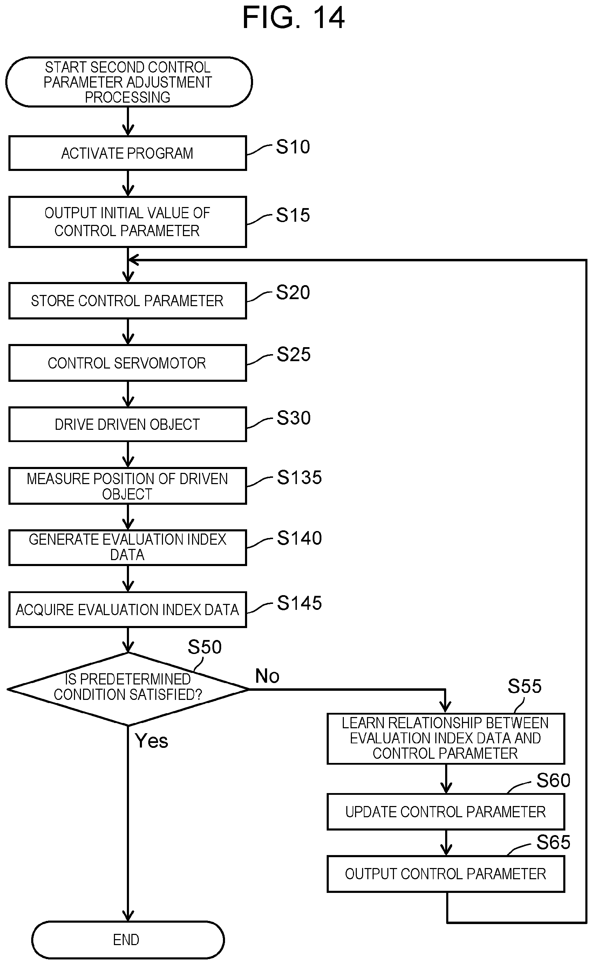

Fig. 13 is a sequence diagram of the second control parameter adjustment processing, and Fig. 14 is a flowchart of the second control parameter adjustment processing.

As illustrated in Figs. 13 and 14, the second control parameter adjustment processing is processing changed from the first control parameter adjustment processing such that the processing in step S35 is changed to the processing in step S135, the processing in step S40 is changed to the processing in step S 140, and the processing in step S45 is changed to the processing in step S145.

When the processing in step S30 ends, sensor 30A with a processing function measures the position of driven object 24 (step S135), and generates measurement data indicating the position of driven object 24 after arrival the time at which driven object 24 reaches the admittable position that can be evaluated as having reached the predetermined target position. Then, sensor 30A with a processing function generates evaluation index data indicating the vibration of driven object 24 after the settling time based on the generated measurement data (step S140), and outputs the generated evaluation index data to input unit 11A. Then, input unit 11 is A and acquires the evaluation index data output from sensor 30A with a processing function (step S145).

When the processing of step S145 ends, control parameter generation system 1A proceeds to the processing of step S50.

In the processing of step S50, when the generated evaluation index data satisfies the predetermined condition (step S50: Yes), control parameter generation system 1A ends the second control parameter adjustment processing.

<Consideration>

As described above, similarly to control parameter generation system 1 according to the first exemplary embodiment, control parameter generation system 1A having the above configuration executes the second control parameter adjustment processing to repeatedly adjust the evaluation index value data until the evaluation index value data satisfies the predetermined condition.

Therefore, according to control parameter generation system 1A, similarly to control parameter generation system 1, it is possible to generate an appropriate control parameter in a relatively short time without being performed by a skilled technician.

(Supplementary)

The first and second exemplary embodiments have been described above as examples of the technique disclosed in the present application. However, the present disclosure is not limited to the first and second exemplary embodiments. Configurations in which various modifications conceived by those skilled in the art are applied to the present exemplary embodiment or the present modification, and configurations constructed by combining components in different exemplary embodiments or modifications may also be included within the scope of one or more aspects of the present disclosure without departing from the gist of the present disclosure.

(1) In the first exemplary embodiment, as an example, generating device 10 is described as being realized by one computer. However, generating device 10 is not necessarily limited to an example realized by one computer as long as the same function can be realized. Generating device 10 may be realized by, for example, a plurality of computers capable of communicating with each other.

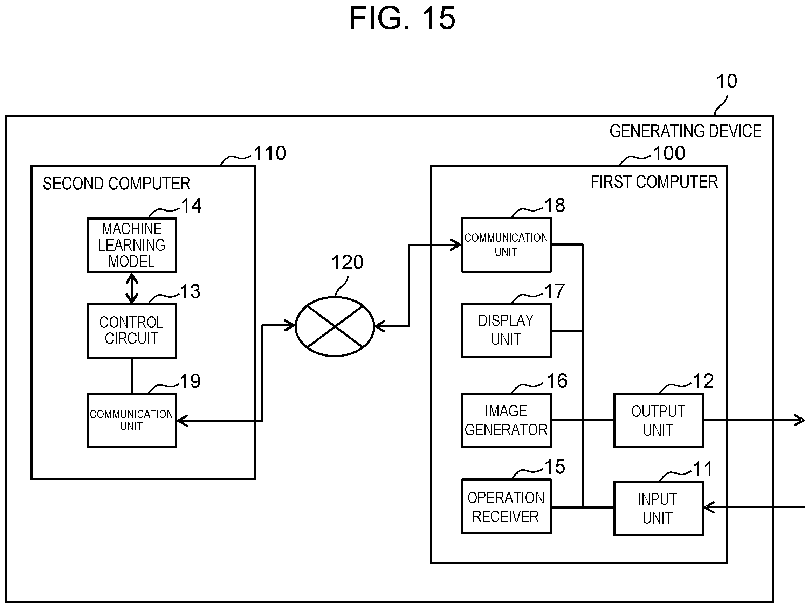

Fig. 15 is a block diagram illustrating an example of a configuration of generating device 10 in a case where generating device 10 is realized by a plurality of computers capable of communicating with each other.

As illustrated in Fig. 15, generating device 10 may be realized by (1) first computer 100 including input unit 11, output unit 12, operation receiver 15, image generator 16, display unit 17, and communication unit 18, (2) second computer 110 including control circuit 13, machine learning model 14, and communication unit 19, and (3) network 120 that communicably connects communication unit 18 and communication unit 19.

In this case, first computer 100 may be, for example, a personal computer, and second computer 110 may be a server.

(2) A comprehensive or specific aspect of the present disclosure may be realized by a system, an apparatus, a method, an integrated circuit, a program, or a non-transitory recording medium such as a computer-readable CD-ROM. In addition, such aspects may also be realized by any combination of a system, an apparatus, a method, an integrated circuit, a program, and a non-transitory recording medium. For example, the present disclosure may be realized as a program for causing a computer to execute processing performed by a generating device.

INDUSTRIAL APPLICABILITY

The present disclosure is widely applicable to a system that generates control parameters, and the like.

REFERENCE MARKS IN THE DRAWINGS

| | |
|---|---|
| 1, 1A | control parameter generation system |
| 10, 10A | generating device |
| 11, 11A | input unit |
| 12 | output unit |
| 13, 13A | control circuit |
| 14 | machine learning model |
| 15 | operation receiver |
| 16 | image generator |
| 17 | display unit |
| 18, 19 | communication unit |
| 20 | production apparatus |
| 21 | memory |
| 22 | control circuit |
| 23 | servomotor |
| 24 | driven object |
| 30 | sensor |
| 30A | sensor with processing function |
| 100 | first computer |
| 110 | second computer |
| 120 | network |

**Claims**

1. A method for generating a control parameter used in a production apparatus including a servomotor, a control circuit for controlling the servomotor, a memory for storing the control parameter used when the control circuit controls the servomotor, and a driven object driven by the servomotor, the method comprising:

acquiring measurement data indicating a position of the driven object from a sensor that measures the position of the driven object, after an arrival time at which the driven object reaches an admittable position based on a command for moving the position of the driven object to a predetermined target position, wherein the admittable position indicates a position where the driven object is evaluated as having reached the predetermined target position;
generating, based on the measurement data, evaluation index data indicating vibration of the driven object occurring after the arrival time; and
updating the control parameter based on the evaluation index data, using a machine learning model that learns a relationship between the evaluation index data and the control parameter.

2. The method according to Claim 1, further comprising
outputting, to the production apparatus, the updated control parameter for storage in the memory.

3. The method according to Claim 1 or 2, wherein
The evaluation index data indicates a sum of an area surrounded by i) a deviation waveform indicating vibration of the driven object occurring after the arrival time and ii) a reference axis.

4. The method according to Claim 1 or 2, wherein
the evaluation index data indicates a variation degree of a deviation waveform indicating vibration of the driven object occurring after the arrival time.

5. The method according to Claim 1 or 2, wherein
the evaluation index data indicates an effective value of a deviation waveform indicating vibration of the driven object occurring after the arrival time.

6. The method according to any one of Claims 1 to 5, wherein

the production apparatus includes at least one of a mounting device, a processing device, and a machining device.

7. A program for causing a computer of an information processing device to execute the method according to at least one of Claims 1 to 6, the information processing device being connected to the production apparatus.

8. A recording medium recording a program for causing a computer of an information processing device to execute the method according to at least one of Claims 1 to 6, the information processing device being connected to the production apparatus.

9. A device for generating a control parameter used in a production apparatus including a servomotor, a first control circuit for controlling the servomotor, a memory for storing a control parameter used when the first control circuit controls the servomotor, and a driven object driven by the servomotor, the device comprising:

an input unit configured to acquire measurement data indicating a position of the driven object from a sensor that measures the position of the driven object after an arrival time at which the driven object reaches an admittable position based on a command for moving the position of the driven object to a predetermined target position, wherein the admittable position indicates a position where the driven object is evaluated as having reached the predetermined target position; and
a second control circuit configured to generate, based on the measurement data, evaluation index data indicating vibration of the driven object occurring after the arrival time, and to update the control parameter based on the evaluation index data using a machine learning model that learns a relationship between the evaluation index data and the control parameter.

10. The device according to Claim 9, further comprising
an output unit configured to output, to the production apparatus, the updated control parameter for storage in the memory.

11. A method for generating a control parameter used in a production apparatus including a servomotor, a control circuit for controlling the servomotor, a memory for storing a control parameter used when the control circuit controls the servomotor, and a driven object driven by the servomotor, the method comprising:

acquiring, from a sensor provided with a processing part that measures a position of the driven object, evaluation index data that indicates vibration of the driven object occurring after an arrival time at which the driven object reaches an admittable position based on a command for moving the position of the driven object to a predetermined target position, wherein the admittable position indicates a position where the driven object is evaluated as having reached the predetermined target position; and
updating the control parameter based on the evaluation index data, using a machine learning model that learns a relationship between the evaluation index data and the control parameter.

12. The method according to Claim 11, further comprising outputting, to the production apparatus, the updated control parameter for storage in the memory.

13. The method according to Claim 11 or 12, wherein
the evaluation index data indicates a sum of an area surrounded by i) a deviation waveform indicating vibration of the driven object occurring after the arrival time and ii) a reference axis.

14. The method according to Claim 11 or 12, wherein
the evaluation index data indicates a variation degree of a deviation waveform indicating vibration of the driven object occurring after the arrival time.

15. The method according to Claim 11 or 12, wherein
the evaluation index data indicates an effective value of a deviation waveform indicating vibration of the driven object occurring after the arrival time.

16. The method according to any one of Claims 11 to 15, wherein
the production apparatus includes at least one of a mounting device, a processing device, and a machining device.

17. A program for causing a computer of an information processing device to execute the method according to at least one of Claims 11 to 15, the information processing device being connected to the production apparatus.

18. A recording medium recording a program for causing a computer of an information processing device to execute the method according to at least one of Claims 11 to 15, the information processing device being connected to the production apparatus.

19. A device for generating a control parameter used in a production apparatus including a servomotor, a first control circuit for controlling the servomotor, a memory for storing a control parameter used when the first control circuit controls the servomotor, and a driven object driven by the servomotor, the device comprising:

an input unit configured to acquire, from a sensor provided with a processing part that measures a position of the driven object, evaluation index data that indicates vibration of the driven object occurred after an arrival time at which the driven object reaches an admittable position based on a command for moving the position of the driven object to a predetermined target position, wherein the admittable position indicates a position where the driven object is evaluated as having reached the predetermined target position; and
a second control circuit configured to update the control parameter based on the evaluation index data, using a machine learning model that learns a relationship between the evaluation index data and the control parameter.

20. The device according to Claim 19, further comprising an output unit configured to output, to the production apparatus, the updated control parameter for storage in the memory.

# FIG. 1

# FIG. 2

# FIG. 3

| PARAMETER NUMBER | VARIABLE NAME | ADJUSTMENT RESOLUTION | ADJUSTMENT RANGE | INITIAL VALUE | ADJUSTMENT TARGET |
|---|---|---|---|---|---|
| 1 | a1 | [0.1 Hz] | 8.0-15.0 | 10.0 | VIBRATION FREQUENCY |
| 2 | a2 | [0.1 Hz] | 8.0-35.0 | 25.0 | VIBRATION FREQUENCY |
| ... | ... | ... | ... | ... | ... |
| 11 | b1 | [0.001] | 0.0-35.0 | 0.1 | SPEED UP |
| 12 | b2 | [0.001] | 0.0-35.0 | 10.0 | SPEED UP |
| ... | ... | ... | ... | ... | ... |
| 21 | c1 | [0.1] | 0.0-1.0 | 0.5 | SPECIFIC POINT DEPTH |
| 22 | c2 | [0.1] | 0.0-1.0 | 0.3 | SPECIFIC POINT DEPTH |
| ... | ... | ... | ... | ... | ... |
| 31 | d1 | [0.01 µm] | 0.05-0.15 | 0.08 | VIBRATION AMPLITUDE |
| 32 | d2 | [0.01 µm] | 0.05-0.15 | 0.08 | VIBRATION AMPLITUDE |
| ... | ... | ... | ... | ... | ... |

# FIG. 4

# FIG. 5

| ELAPSED TIME AFTER ALLOWABLE POSITION ARRIVAL TIME [ms] | DEVIATION AMOUNT FROM TARGET POSITION [mm] |
|---|---|
| 0.01 | 0.982 |
| 0.02 | 0.975 |
| … | … |
| 100.00 | 0.250 |
| 100.01 | 0.333 |
| … | … |

## FIG. 6

VALUE OF
EVALUATION
INDEX DATA

PREDICT RELATIONSHIP BETWEEN VALUE OF
CONTROL PARAMETER AND VALUE OF
EVALUATION INDEX DATA WITHIN CERTAIN RANGE

PREDICT VALUE OF CONTROL PARAMETER IN WHICH VALUE
OF EVALUATION INDEX DATA IS MINIMUM

-3   -2  -1.5   -0.5  0     1     2

VALUE OF CONTROL
PARAMETER

EP 4 425 279 A1

# FIG. 7

SELECTION OF EVALUATION INDEX

SELECT EVALUATION INDEX

☑ SETTLING TIME

☑ VIBRATIO

⬤ AREA $\int_{sett\_t}^{cal\_e} |E(t)|\, dt$

◯ VARIANCE $\dfrac{\int_{sett\_t}^{cal\_e} E(t)^2 dt}{def} - \left(\dfrac{\int_{sett\_t}^{cal\_e} |E(t)| dt}{def}\right)^2$

◯ RMS (EFFECTIVE VALUE) $\sqrt{\dfrac{1}{def} \int_{sett\_t}^{cal\_e} E(t)^2\, dt}$

POSITION DEVIATION f

f=E(t)

REQUIRED ACCURACY

SETTLING TIME

TARGET POSITION

sett_t

cal_e

TIME t

def=cal_e-sett_t

EP 4 425 279 A1

# FIG. 8

DISPLAY CURRENT SITUATION

**ADJUSTMENT SITUATION**

SUSPEND

RESUME

| STATUS | DURING ADJUSTMENT |
| NUMBER OF ADJUSTMENT PARAMETERS | 40 |
| NUMBER OF TRIALS | 1000 |
| ADJUSTED ELAPSED TIME | 2H30m |

EVALUATION INDEX VALUE

#Trials

EVALUATION INDEX: SETTLING TIME AND VIBRATION (AREA)

| Params | num trials | Min | Mean | Max |
|---|---|---|---|---|
| 40 | 1000 | 51.5 | 70.9 | 86.5 |

DISPLAY SELECTED EVALUATION INDEX DATA

DISPLAY CURRENT EVALUATION RESULT

# FIG. 9

EP 4 425 279 A1

# FIG.10

```
┌─────────────────────────────┐
│   START FIRST CONTROL       │
│   PARAMETER ADJUSTMENT      │
│   PROCESSING                │
└─────────────────────────────┘
              │
              ▼
┌─────────────────────────────┐
│   ACTIVATE PROGRAM          │──── S10
└─────────────────────────────┘
              │
              ▼
┌─────────────────────────────┐
│   OUTPUT INITIAL VALUE OF   │──── S15
│   CONTROL PARAMETER         │
└─────────────────────────────┘
              │
              ▼
┌─────────────────────────────┐
│   STORE CONTROL PARAMETER   │──── S20
└─────────────────────────────┘
              │
              ▼
┌─────────────────────────────┐
│   CONTROL SERVOMOTOR        │──── S25
└─────────────────────────────┘
              │
              ▼
┌─────────────────────────────┐
│   DRIVE DRIVEN OBJECT       │──── S30
└─────────────────────────────┘
              │
              ▼
┌─────────────────────────────┐
│   MEASURE POSITION OF       │──── S35
│   DRIVEN OBJECT             │
└─────────────────────────────┘
              │
              ▼
┌─────────────────────────────┐
│   ACQUIRE MEASUREMENT DATA  │──── S40
└─────────────────────────────┘
              │
              ▼
┌─────────────────────────────┐
│   GENERATE EVALUATION INDEX │──── S45
│   DATA                      │
└─────────────────────────────┘
              │
              ▼       S50
         ◇─────────────◇        No      ┌──────────────────────────────┐
         │ IS PREDETERMINED│────────────│ LEARN RELATIONSHIP BETWEEN   │──── S55
         │ CONDITION       │            │ EVALUATION INDEX DATA AND    │
         │ SATISFIED?      │            │ CONTROL PARAMETER            │
         ◇─────────────◇            └──────────────────────────────┘
              │ Yes                              │
              │                                  ▼
              │                   ┌──────────────────────────────┐
              │                   │ UPDATE CONTROL PARAMETER     │──── S60
              │                   └──────────────────────────────┘
              │                                  │
              │                                  ▼
              │                   ┌──────────────────────────────┐
              │                   │ OUTPUT CONTROL PARAMETER     │──── S65
              │                   └──────────────────────────────┘
              ▼
      ┌───────────────┐
      │     END       │
      └───────────────┘
```

# FIG. 11

# FIG. 12

## FIG. 13

GENERATING DEVICE 10A     SENSOR 30A

PRODUCTION APPARATUS 20
MEMORY 21   CONTROL CIRCUIT 22   SERVOMOTOR 23

S10 — ACTIVATE PROGRAM

S15 — OUTPUT INITIAL VALUE OF CONTROL PARAMETER

INITIAL VALUE OF CONTROL PARAMETER

S20 — STORE CONTROL PARAMETER

S25 — CONTROL SERVOMOTOR COMMAND

S30 — DRIVE DRIVEN OBJECT

S135 — MEASURE POSITION OF DRIVEN OBJECT

S140 — CALCULATE EVALUATION INDEX DATA

EVALUATION INDEX DATA

S145 — ACQUIRE EVALUATION INDEX DATA

S55 — LEARN RELATIONSHIP BETWEEN EVALUATION INDEX DATA AND CONTROL PARAMETER

S60 — UPDATE CONTROL PARAMETER

S65 — OUTPUT CONTROL PARAMETER

CONTROL PARAMETER

S20 — STORE CONTROL PARAMETER

S25 — CONTROL SERVOMOTOR COMMAND

S30 — DRIVE DRIVEN OBJECT

REPEAT UNTIL PREDETERMINED CONDITION IS SATISFIED

S135 — MEASURE POSITION OF DRIVEN OBJECT

S140 — CALCULATE EVALUATION INDEX DATA

EVALUATION INDEX DATA

EP 4 425 279 A1

# FIG. 14

```
START SECOND CONTROL
PARAMETER ADJUSTMENT
PROCESSING
```

ACTIVATE PROGRAM — S10

OUTPUT INITIAL VALUE OF
CONTROL PARAMETER — S15

STORE CONTROL PARAMETER — S20

CONTROL SERVOMOTOR — S25

DRIVE DRIVEN OBJECT — S30

MEASURE POSITION OF DRIVEN
OBJECT — S135

GENERATE EVALUATION INDEX
DATA — S140

ACQUIRE EVALUATION INDEX DATA — S145

S50

IS PREDETERMINED
CONDITION SATISFIED?     No

Yes

LEARN RELATIONSHIP BETWEEN
EVALUATION INDEX DATA AND
CONTROL PARAMETER — S55

UPDATE CONTROL PARAMETER — S60

OUTPUT CONTROL PARAMETER — S65

END

# FIG. 15

EP 4 425 279 A1

## INTERNATIONAL SEARCH REPORT

| International application No. |
|---|
| **PCT/JP2022/034357** |

| A. | CLASSIFICATION OF SUBJECT MATTER |
|---|---|

*G05B 13/02*(2006.01)i
FI:   G05B13/02 L

According to International Patent Classification (IPC) or to both national classification and IPC

| B. | FIELDS SEARCHED |
|---|---|

Minimum documentation searched (classification system followed by classification symbols)

G05B13/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021/053784 A1 (MITSUBISHI ELECTRIC CORP) 25 March 2021 (2021-03-25) paragraphs [0014]-[0020], [0084]-[0087], [0089]-[0090], fig. 1, 6-7 | 1-10 |
| Y | paragraphs [0014]-[0020], [0084]-[0087], [0089]-[0090], fig. 1, 6-7 | 11-20 |
| Y | JP 2020-148624 A (OKI ELECTRIC IND CO LTD) 17 September 2020 (2020-09-17) paragraphs [0017]-[0020], [0023] | 11-20 |
| A | JP 2020-154989 A (FANUC LTD) 24 September 2020 (2020-09-24) entire text, all drawings | 1-20 |
| A | JP 9-81206 A (KAYABA IND CO LTD) 28 March 1997 (1997-03-28) entire text, all drawings | 1-20 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 November 2022** | **22 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<div align="center">

**INTERNATIONAL SEARCH REPORT**
**Information on patent family members**

</div>

| | | International application No. |
|---|---|---|
| | | **PCT/JP2022/034357** |

| Patent document cited in search report | Publication date (day/month/year) | Patent family member(s) | Publication date (day/month/year) |
|---|---|---|---|
| WO 2021/053784 A1 | 25 March 2021 | US 2022308531 A1 paragraphs [0029]-[0036], [0076]-[0079], [0081]-[0082], fig. 1, 6-7 <br> CN 114514481 A <br> TW 202113634 A <br> KR 10-2022-0044549 A | |
| JP 2020-148624 A | 17 September 2020 | (Family: none) | |
| JP 2020-154989 A | 24 September 2020 | US 2020/0301376 A1 entire text, all drawings <br> DE 102020203377 A1 <br> CN 111722530 A | |
| JP 9-81206 A | 28 March 1997 | (Family: none) | |

Form PCT/ISA/210 (patent family annex) (January 2015)

**REFERENCES CITED IN THE DESCRIPTION**

**Patent documents cited in the description**

- WO 2018151215 A